Europäisches Patentamt

European Patent Office

Office européen des brevets

(11) Publication number: **0 251 586 B1**

# EUROPEAN PATENT SPECIFICATION

(45) Date of publication of patent specification: **29.04.92**  (51) Int. Cl.5: **C08G 64/24**

(21) Application number: **87305423.3**

(22) Date of filing: **18.06.87**

(54) Process for producing a resin having carbonate bonding.

(30) Priority: **18.06.86 JP 142164/86**
**18.06.86 JP 142165/86**
**03.10.86 JP 235829/86**

(43) Date of publication of application:
**07.01.88 Bulletin  88/01**

(45) Publication of the grant of the patent:
**29.04.92 Bulletin  92/18**

(84) Designated Contracting States:
**DE IT NL**

(56) References cited:
DE-A- 1 943 803
FR-A- 2 456 761

PATENT ABSTRACTS OF JAPAN, vol. 9, no.
218 (C-301)[1941], 5th September 1985; & JP-
A-60 81 245 (IDEMITSU SEKIYU KAGAKU K.K.)
09-05-1985

(73) Proprietor: **MITSUBISHI KASEI CORPORATION**
**5-2, Marunouchi 2-chome Chiyoda-ku**
**Tokyo 100(JP)**

(72) Inventor: **Koga, Shinichiro**
**632-4 Oaza-Yambe**
**Nohgata-shi Fukuoka-ken(JP)**
Inventor: **Matsuno, Akira**
**3-554-43 Nishi-Oji-machi Yahata-Nishi-ku**
**Kitakyushu-shi Fukuoka-ken(JP)**
Inventor: **Sakata, Katsuyuki**
**287-206 Aza-Sasao Oaza-Nakama**
**Nakama-shi Fukuoka-ken(JP)**
Inventor: **Ohtani, Yoshiaki**
**1002-54 Oaza-Nakama**
**Nakama-shi Fukuoka-ken(JP)**
Inventor: **Akihara, Isao**
**8-24 Nishi-Magari-machi Yahata-Nishi-ku**
**Kitahyushu-shi Fukuoka-ken(JP)**

(74) Representative: **Woods, Geoffrey Corlett et al**
**J.A. KEMP & CO. 14 South Square Gray's Inn**
**London WC1R 5EU(GB)**

**Description**

The present invention relates to a process for producing a resin having carbonate bondings, using methylene chloride as an organic solvent and phosgene as a starting material.

Phosgene usually contains from 250 ppm to 2000 ppm of carbon tetrachloride ($CC1_4$) as disclosed in Japanese Patent Publication No. 55-14044 (1980).

When producing a polymer using phosgene containing $CC1_4$ as a starting material and methylene chloride as a solvent, most of the $CC1_4$ is dissolved in the methylene chloride and, as a result, contained in the methylene chloride solution of the polymer.

$CC1_4$ in the polymer solution is distributed between the polymer and methylene chloride when they are separated in a particular ratio depending on the separation conditions.

Usually the separated methylene chloride is used again in industrial processes without removing the $CC1_4$. Accordingly, the $CC1_4$ concentration in the methylene chloride increases as the number of recycles increases. Polymers produced in this methylene chloride solvent contain acidic components, originating upon heating in pelletization and molding, which corrode dies in the molding machine when the operation thereof is stopped as disclosed in JP-A-60-81245 (1985). In this case, mold-die corrosion is prevented by blending a specific ester with the molding composition.

Furthermore, the quality of the polymer is not satisfactory since the tone of pellets or molding pieces is worsened depending on the kind or amount of heat stabilizers used. It has not yet been recognized that this drawback is caused by the carbon tetrachloride present in the starting phosgene and methylene chloride.

We have studied the prevention of the formation of the acidic component upon pelletization and molding of the resultant pellets, and the manner in which the tone of the pellets or molding pieces might be improved and, as a result, found that these undesirable effects are attributable to the $CC1_4$ contained in the methylene chloride solution of the polymer.

DE-A-1,943,803 describes a process for preparing a polycarbonate oligomer, but is entirely silent regarding the presence of impurities causing yellowing. FR-A-2,456,761 describes a method for preventing yellowing in a polymer article which comprises removing volatile impurities after the production of the polycarbonate.

We have found that a resin having carbonate bondings of excellent quality, having no acidic components upon pelletization or molding and having favourable tone of pellets and molding pieces can be produced by reducing the $CC1_4$ concentration in the starting phosgene and methylene chloride.

Accordingly the present invention provides a process for producing a resin having carbonate bondings, which comprises polymerizing a hydroxydiaryl compound, phosgene and, optionally, a diamine compound or an acid chloride, in a methylene chloride organic solvent, characterized in that the concentration of carbon tetrachloride in the phosgene and methylene chloride satisfies the following equation:

$$A + 5B \leq 200$$

wherein A represents the carbon tetrachloride concentration (ppm) in phosgene and B represents the carbon tetrachloride concentration (ppm) in methylene chloride.

Examples of a resin having carbonate bondings are thermoplastic resins such as polycarbonates, polyester carbonates and polycarbonate carbamates.

The polycarbonate resin includes polymers or copolymers, for example one produced from 2,2-bis(4-hydroxyphenyl)propane (bisphenol A) and phosgene.

Examples of dihydroxydiaryl compounds are bisphenol A and bis(4-hydroxyaryl)alkanes such as
bis(4-hydroxyphenyl)methane,
1,1-bis(4-hydroxyphenyl)ethane,
2,2-bis(4-hydroxyphenyl)butane,
2,2-bis(4-hydroxyphenyl)octane,
bis(4-hydroxyphenyl)phenylmethane,
1,1-bis(4-hydroxyphenyl)phenylethane,
2,2-bis(4-hydroxy-3-methylphenyl)propane,
1,1-bis(4-hydroxy-3-tert-butylphenyl)propane,
2,2-bis(4-hydroxy-3-bromophenyl)propane,
2,2-bis(4-hydroxy-3,5-dibromophenyl)propane and
2,2-bis(4-hydroxy-3,5-dichlorophenyl)propane;
bis(hydroxyaryl)cycloalkanes such as
1,1-bis(4-hydroxyphenyl)cyclopentane and

2

1,1-bis(4-hydroxyphenyl)cyclohexane;
dihydroxydiaryl ethers such as
4,4'-dihydroxy diphenyl ether and
4,4'-dihydroxy-3,3'-dimethyl diphenyl ether;
dihydroxydiaryl sulfides such as
4,4'-dihydroxydiphenyl sulfide and
4,4'-dihydroxy-3,3'-dimethyl diphenyl sulfide;
dihydroxydiaryl sulfoxides such as
4,4'dihydroxydiphenyl sulfoxide and
4,4'-dihydroxy-3,3'-dimethyl diphenyl sulfoxide; and
dihydroxy diaryl sulfones such as
4,4'-dihydroxydiphenyl sulfone and
4,4'-dihydroxy-3,3'-dimethyldiphenyl sulfone.

These may be used alone or as a mixture of two or more. Hydroquinone, resorcine or 4,4'-dihydroxydiphenyl may be used in admixture with the dihydroxydiaryl compounds.

Examples of polyester polycarbonate resins are copolymers obtained by the reaction of the dihydroxydiaryl compounds mentioned above, phosgene and acid chloride (for example terephthalic chloride or isophthalic chloride) [JP-A-55-25427 (1980) and JP-A-55-38824 (1980)].

Examples of polycarbonate carbamates are copolymers obtained by the reaction of piperazine or dipiperidine, a dihydroxydiaryl compound and phosgene [JP-A-60-31527 (1985) and 60-35024 (1985)].

$CCl_4$ is usually present in the starting phosgene at a concentration of from 250 to 2000 ppm. $CCl_4$ is dissolved in the methylene chloride used in the production of a polymer and remains in the polymer solution. The polymer concentration in the polymer solution is preferably from 5 to 30% by weight, more preferably from 10 to 25% by weight.

The $CCl_4$ in the polymer solution is distributed between the polymer and the methylene chloride upon separating them in a ratio which depends on the separation conditions. Although $CCl_4$ is not usually contained in commercially available methylene chloride, since the methylene chloride separated from the polymer is recycled without separating $CCl_4$ in industrial processes, the $CCl_4$ concentration in methylene chloride increases as the number of recycles which it undergoes increases. Furthermore, $CCl_4$ may also be produced upon separating the polymer and methylene chloride if they are heated to a high temperature.

Acidic components are formed when pelletizing a polymer produced in methylene chloride containing a great amount of $CCl_4$. Upon molding such pellets, or from the resultant pellets, corrosion of the die in the molding machine is caused, and the tone of the pellets or molding pieces are not quite satisfactory.

In view of the above, we have found that the $CCl_4$ concentration in the polymer solution before separating the methylene chloride and the polymer should be as low as possible.

As a method of reducing the $CCl_4$ concentration in the polymer solution, the intrusion of $CCl_4$ may be decreased by reducing the $CCl_4$ concentration in the starting phosgene, by which the $CCl_4$ concentration can be reduced to not more than 200 ppm, preferably to not more than 150 ppm.

$CCl_4$ may, for example, be removed from the starting phosgene by adsorption on activated carbon or by fractional distillation utilizing the difference in boiling point between phosgene and carbon tetrachloride.

In the case of distillation, sufficient removal can be attained by a single stage distillation or distillation in a plurality of stages and this method is preferred since satisfactory results can be obtained by a relatively simple device.

The $CCl_4$ content of the methylene chloride may be reduced, for example, by distillation of a portion or the entire amount of methylene chloride during recycling of the methylene chloride.

To lower the $CCl_4$ concentration in the methylene chloride, the dissolved oxygen concentration in the methylene chloride solution of the polymer may be decreased when evaporating the methylene chloride from the solution to leave a polymer powder.

The dissolved oxygen concentration in the methylene chloride solution of the polymer in this case is preferably no more than 20 ppm, more preferably not more than 10 ppm.

The dissolved oxygen concentration in the methylene chloride solution of the polymer is usually not less than about 30 ppm when the process is carried out in air. The dissolved oxygen in the methylene chloride solution of the polymer is increased by the dissolution of oxygen from air. For instance, polymerization and washing of the polymer may be conducted in an agitation vessel. Furthermore, part of the methylene chloride or the methylene chloride solution of the polymer in a storage tank may be passed to the succeeding step while the remainder is recycled to the storage tank using a centrifugal pump. Since

3

a gas phase is present in the agitation vessel or storage tank and it is impossible to operate under completely airtight conditions, air allowed in, for example from the gland portions for the stirring, and vent pipes, is dissolved into the methylene chloride solution of the polymer due to the agitation or the recycling.

To decrease the dissolved oxygen in the methylene chloride solution of polymer, there are the following methods:

(1) removing dissolved oxygen from the starting materials and preventing the presence of external oxygen by conducting all of the production steps in a pressurized inert gas atmosphere;

(2) removing dissolved oxygen from the methylene chloride solution of the polymer by blowing in an inert gas before the concentration and powderization;

(3) removing the dissolved oxygen directly, for example by the addition of a reducing agent.

The method (3), using a reducing agent, is not preferred since the reducing agent, if it is a solid or a high boiling-point liquid, may remain in the polymer product and undesirably affect the quality of the product. The method (1) is not preferred since it is difficult to operate under airtight conditions. Thus method (2) is preferred. Examples of inert gases are nitrogen and argon. As an example of this method, where the nitrogen is blown at double the volume of the methylene chloride solution of the polymer into the methylene chloride solution of the polymer before the condensation and powderization, the dissolved oxygen concentration is reduced to about 1/10 and the dissolved oxygen in the methylene chloride solution of the polymer can be removed relatively simply.

While $CC1_4$ may be removed by any of the methods as described above, it is necessary that the $CC1_4$ concentration in the polymerization system be kept within the range defined by the following formula:

$$A + 5B \leq 200,$$

wherein A represents the $CC1_4$ concentration in the phosgene (ppm) and B represents the $CC1_4$ concentration in the methylene chloride (ppm); preferably $A + 5B < 150$ and, more preferably $A + 5B \leq 100$.

It is generally satisfactory that the carbon tetrachloride concentration in the resulting polymer is not more than 20 ppm, preferably not more than 10 ppm.

The methylene chloride may be used in a mixture, for example with a chlorinated hydrocarbon such as dichlorobenzene, chloroform, tetrachloroethane, trichloroethane, dichloroethane or 1,2-dichloroethylene, or with dioxane, tetrahydrofuran, acetophenone, toluene, xylene, cyclohexane, acetone or n-heptane. Mixtures containing not less than 60% methylene chloride are preferred and 100% methylene chloride is most suitable.

To form the polymer interfacial polymerization may, for example, be used, which comprises reacting phosgene or phosgene and acid chloride with a dihydroxydiaryl compound in the presence of a diamine compound, organic solvent, water and alkali hydroxide, or a solution polymerization may be used wherein a dissolved hydroxydiaryl compound and optional diamine compound is reacted with phosgene or phosgene and an acid chloride in the presence of an organic alkali and an organic solvent as an acid acceptor.

The polymer solution after polymerization may be diluted with methylene chloride as required for washing and purification. The polymerization system referred to in the present invention may include the step of polymerizing as described above and, in the case of conducting dilution, the step of dilution as well. Impurities in the polymer solution may be removed by washing, for example with an aqueous alkali solution, an aqueous acid solution or water. Washing is generally conducted using a mixer settler or centrifugal extractor.

The polymer may, for example, be powderized by heating the polymer solution and removing methylene chloride, or by precipitation, for example by adding a non-solvent.

Since methylene chloride and non-solvents may be contained in the polymer, these solvents are removed by drying using an ordinary method.

Since the powdery polycarbonate obtained according to the present invention produces no acidic component when heated upon pelletization or molding, problems such as corrosion of the die in the molding machine can be eliminated. Thus eliminating rust deposited on the molding machine is not necessary upon restarting the molding machine after stopping. While previously a great amount of polymer has been necessary for removing rust in the molding machine, such removal is no longer required and consequently the loss of the polymer is decreased.

The tone of the resultant pellets or molding pieces is stable and favorable due to the reduction in the $CC1_4$ concentration. Products of substantially satisfactory quality can thus be obtained.

The present invention is explained further in the following Examples.

Examples 1 - 3 and Comparative Example 1 - 3

To remove $CC_4$ contained in phosgene (concentration: 500 ppm), 2 liters of liquefied phosgene were charged into a 3 liter flask and subjected to rectification for 4 hours using a Widmer rectification pipe at a column temperature of 8°C and a reflux ratio of 1:1.

As a result, the $CC_4$ concentration in the phosgene was reduced to 5 ppm (1.66 kg) at the top, but was 1200 ppm (1.17 kg) at the bottom of the column.

A polycarbonate was prepared by using the thus resultant phosgene from the column top in accordance with an ordinary method [refer to JP-A-61-14227 (1986)]. That is, 15.3 liters of purified water, 1.03 kg (25.7 mol) of sodium hydroxide, 3.0 g of sodium hydrosulfite and 2,790 g (12.2 mol) of bisphenol A were successively added under stirring and completely dissolved in a 25 liter glass-lined vessel equipped with baffle plates and having a stirrer, a phosgene blowing tube, a thermometer and a drain cock disposed at the bottom portion.

Then, 3.1 liters (7.65 mol) of an aqueous 10 wt/vol % sodium hydroxide solution and 7.65 liters of methylene chloride ($CC_4$ concentration: 5 ppm) were added. 1.38 kg (13.9 mol) of phosgene was blown in under stirring for 60 minutes while keeping the liquid temperature at 20°C by external cooling, and, thereafter, 66.7 g of para-tert-butylphenol and 3.1 g of triethylamine were added. The mixture was stirred for one hour and polymerization took place.

After the completion of the polymerization and one washing of the organic phase in the lower layer with purified water, 3.0 liters of 10% phosphoric acid was added for neutralization, the mixture was washed with purified water three times and heated to distil off methylene chloride and to obtain a powdery polycarbonate.

The powdery polycarbonate was dried by an ordinary method and kneaded into pellets with no addition of additives such as heat stabilizer in a 20 mm$\phi$ extruder (manufactured by Tanabe Plastic Co.) (kneading temperature: 280°C, number of screw rotations: 40 rpm, kneading rate: 1.6 kg/Hr, polymer staying time: 2 min).

The resultant pellet was in the shape of 1.3 mm$\phi$ and 2.5 mmL (length).

The pellets were dried by an ordinary method and YI (yellow index) was measured by a color difference meter (Model TC-55D, manufactured by Tokyo Denshoku Co.). The pellet had satisfactory YI of 6.

Measurement in a metal corrosion test was then conducted by the method described below.

After molding 200 sheets of flat plates of 7 cm length, 4 cm width and 3.2 mm thickness by injection molding (molding temperature 300°C) using carbon steel molding dies (S55C), the molding dies after use were left at room temperature for 24 hours and the surface state of them was evaluated by visual observation. The ratings for the evaluation were as below:

Evaluation 0 :    no rust
Evaluation 1 :    point-corrosion
Evaluation 2 :    partial brown rust
Evaluation 3 :    entire brown rust

Evaluation result for the corrosion of the dies was satisfactory if there was no occurrence of rust, since it is necessary for practical use that the evaluation result for the corrosion is "0".

Measurements were also conducted for pellets obtained by adding $CC_4$ (guaranteed reagent, manufactured by Wako Junyaku Co.) to phosgene and/or methylene chloride so as to provide $CC_4$ content as shown in Table 1 below and conducting polymerization in the same manner as above. Similarly, measurements were also conducted for the case where the $CC_4$ concentration in phosgene was 200 ppm using fresh methylene chloride ($CC_4$ concentration (B) = 0). The results are as shown in Table 1 below.

For the comparison, the result in a case where the value of A + 5B exceeds 200 ppm is also shown.

## Table 1

| | CC1$_4$ concentration (ppm) | | | Die corrosion test | Pellet tone YI |
|---|---|---|---|---|---|
| | in phosgene (A) | in methylene chloride (B) | A + 5B | | |
| Example 1 | 5 | 5 | 30 | 0 | 6 |
| " 2 | 10 | 20 | 110 | 0 | 7 |
| " 3 | 50 | 20 | 150 | 0 | 8 |
| " 4 | 200 | 0 | 200 | 0 | 8 |
| Comparative Example 1 | 50 | 50 | 300 | 1 | 11 |
| " 2 | 50 | 110 | 600 | 2 | 15 |
| " 3 | 500 | 20 | 600 | 2 | 15 |

Example 5

To remove CC1$_4$ contained in phosgene (concentration: 500 ppm), 2 liters of liquefied phosgene were charged into a 3 liter flask and subjected to rectification by using a Widmer rectification pipe at a column temperature of 8°C and a reflux ratio of 1:0.5.

As a result, a CC1$_4$ concentration of 50 ppm in phosgene was obtained at the column top.

A polycarbonate was produced by using the phosgene obtained using the same procedure as that described in Example 1 except that methylene chloride containing CC1$_4$ in a concentration of 10 ppm was used.

After the completion of the polymerization, 10.1 liters of methylene chloride prepared by adding CC1$_4$ to methylene chloride containing no CC1$_4$ so as to adjust the CC1$_4$ concentration to 10 ppm was added to the organic phase in the lower layer. After washing once with purified water, 3.0 liters of 10% phosphoric acid were added for neutralization and, after washing three times with purified water, methylene chloride was distilled off by heating to obtain a powdery polycarbonate.

The distilled methylene chloride was collected by cooling and 95% of the charged methylene chloride was recovered. 10% of the recovered methylene chloride was distilled off to reduce the CC1$_4$ concentration in methylene chloride to not more than 2 ppm. The recovered methylene chloride, the distilled methylene chloride and supplementary methylene chloride (methylene chloride corresponding to 5% of the charged methylene chloride prepared from methylene chloride containing no CC1$_4$ and adjusted 10 ppm by adding CC1$_4$) were mixed and used as the methylene chloride for polymerization and washing.

The procedures of polymerization, washing and powderization were conducted six times. The CC1$_4$ concentration in the recovered methylene chloride substantially reached equilibrium of 8 ppm at the fifth operation. The resulting powdery polycarbonate obtained by recycling methylene chloride six times was dried by an ordinary method and kneaded with no addition of additives such as heat stabilizers in a 20 mm∅ extruder (manufactured by Tanabe Plastic Co.) into pellets (kneading temperature: 280°C, screw rotational number: 40 rpm, kneading rate: 1.6 kg/Hr, polymer staying time: 2 min).

6

The resulting pellets were in the shape of 1.3 mm∅ × 2.5 mmL (length). The pellets were dried by an ordinary method and YI and mold die corrosion tests weere carried out in the same manner as described in Example 1.

The results are shown in Table 2 below.

Examples 6 and 7

Starting phosgene was prepared by adding carbon tetrachloride to a column top solution obtained by the same procedure as described in Example 5 (a column top solution prepared by distillation in a Widmer rectification pipe for removing $CC1_4$ in phosgene) to attain a $CC1_4$ concentration in phosgene as shown in Table 2 below.

A solvent was prepared by adding carbon tetrachloride to methylene chloride containing no $CC1_4$ so as to adjust the $CC1_4$ concentration in methylene chloride to a value as shown in Table 2 below.

Polymers were prepared using the same procedure as described in Example 5 using the phosgene and methylene chloride adjusted with the carbon tetrachloride ($CC1_4$) concentration. A predetermined amount of the recovered methylene chloride was recycled after distillation and, when the $CC1_4$ concentration in the recovered methylene chloride reached an equilibrium, the die corrosion by the resultant polymer and the pellet tone were evaluated.

The results are shown in Table 2 below. Satisfactory results were obtained for the die corrosion evaluation and the pellet tone in the case where the value of A + 5B is not more than 200.

Comparative Examples 4 - 6

Polymers were prepared by the same procedure as described in Example 5 while varying the concentration of $CC1_4$ in phosgene and the $CC1_4$ concentration in the recycled methylene chloride. A predetermined amount of the recovered methylene chloride was recycled after distillation and when the $CC1_4$ concentration in the recovered methylene chloride reached an equilibrium the die corrosion of the resultant polymer and the pellet tone were evaluated.

7

No satisfactory results were obtained when the value for A + 5B exceeded 200. The results are also shown in Table 2.

Table 2

| | Distillation ratio for recycled methylene chloride (%) | CCl$_4$ concentration | | | | Die corrosion test | Pellet tone YI |
| | | Starting phosgene (A) (ppm) | Recycled methylene chloride | | A + 5B (ppm) | | |
| | | | Initial value (ppm) | Equilibrium value (B) (ppm) | | | |
|---|---|---|---|---|---|---|---|
| Example 5 | 10 | 50 | 10 | 8 | 90 | 0 | 7 |
| " 6 | 10 | 70 | 10 | 10 | 120 | 0 | 7 |
| " 7 | 30 | 100 | 10 | 8 | 140 | 0 | 8 |
| Comparative Example 4 | 10 | 100 | 15 | 38 | 290 | 1 | 11 |
| " 5 | 10 | 200 | 100 | 71 | 555 | 2 | 13 |
| " 6 | 5 | 200 | 100 | 123 | 815 | 3 | 19 |

Example 8

To the same glass lined vessel used in Example 1, 15.3 liters of purified water, 1.03 kg (25.7 mol) of sodium hydroxide, 3.0 g of sodium hydrosulfide and 2,790 g (12.2 5 mol) of bisphenol A were successively added and dissolved completely under stirring.

3.1 liters (7.65 mol) of an aqueous 10 wt/vol% of sodium hydroxide solution and 7.65 liters of methylene chloride were then added and 1.38 kg (13.9 mol) of phosgene was blown in under stirring for 60 min while keeping the liquid temperature at 20°C by external cooling. 66.7 g of para-tert-butylphenol and 3.1 g of triethylamine were subsequently added and polymerization was carried out under stirring for one hour.

After the completion of the polymerization, 14.1 liters of methylene chloride were added to the organic phase in the lower layer and washed once with purified water, 3.0 liters of 10% phosphoric acid were then added for neutralization and washed three times with purified water to obtain a purified methylene chloride solution.

When analyzing the 10% methylene chloride solution of the polymer (15 liters), the dissolved oxygen concentration was 30 ppm and the $CCl_4$ concentration was 5 ppm.

When the dissolved oxygen concentration was measured after blowing a nitrogen gas at a rate of 6.0 liter/min for 10 min into the polymer solution, it was 0 ppm. The solution was charged into a nitrogen-substituted 20 liter volume autoclave made of stainless steel (SUS-316) and maintained at 180°C for 2 hours with no stirring.

After heat treatment, it was cooled to ambient temperature and the $CCl_4$ concentration in the methylene chloride solution of the polymer was quantitatively determined to be 5 ppm by gas chromatography (GC7A manufactured by Shimazu Seisakusho).

The polymer solution of the methylene chloride was heated again and methylene chloride was distilled off to obtain a powdery polycarbonate.

The powdery polycarbonate was dried in an ordinary manner and kneaded into pellets with no addition of additives such as heat stabilizer in a 20 mm∅ extruder (manufactured by Tanabe Plastic Co.) (kneading temperature: 280°C, number of screw rotations: 40 rpm, kneading rate: 1.6 kg/Hr, polymer staying time: 2 min).

The resulting pellets were in the form of shape of 1.3 mm∅ and 2.5 mmL (length).

The pellets were dried by an ordinary method and YI (yellow index) was measured by a color difference meter (Model TC-55D, manufactured by Tokyo Denshoku Co.).

The pellets had a satisfactory YI value of 6.

Example 9

Dissolved oxygen was removed from the 10 wt% methylene chloride solution of a polymer prepared in the same procedure as described in Example 8 by blowing in a nitrogen gas at a rate of 6.0 liter/min for 4 minutes. The residual dissolved oxygen concentration was 5 ppm. The methylene chloride solution of the polymer was charged into a 20 liter autoclave made of stainless steel under nitrogen gas and maintained at 180°C for 2 hours with no stirring in the same manner as described in Example 8.

As a result, the $CCl_4$ concentration in the methylene chloride solution of the polymer after the heat treatment was 16 ppm. When the polymer solution of the methylene chloride was powderized and kneaded in an extruder, the pellet had a YI value of 7.

Example 10

Dissolved oxygen was removed from a 10 wt% methylene chloride solution of the polymer prepared in the same procedure as described in Example 8 by blowing in a nitrogen gas at a rate of 6.0 liter/min for 2 minutes. The residual dissolved oxygen concentration was 10 ppm. The methylene chloride solution of the polymer was charged into a 20 liter autoclave made of stainless steel under nitrogen gas and maintained at 180°C for 2 hours with no stirring in the same manner as described in Example 8.

As a result, the $CCl_4$ concentration in the methylene chloride solution of the polymer after the heat treatment was 25 ppm. When the polymer solution of the methylene chloride was powderized and kneaded in an extruder, the pellet had a YI value of 8.

Comparative Example 7

A methylene chloride solution of 10 wt% polymer concentration and 30 ppm dissolved oxygen concentration prepared in the same procedure as described in Example 8 was charged in the same 20 liter autoclave made of stainless steel (not under nitrogen) used in Example 8 and maintained at 180°C for 2 hours with no stirring.

As a result, the $CCl_4$ concentration in the methylene chloride solution of the polymer after heat treatment was 65 ppm and the pellets obtained by powderizing and drying the polymer solution and then kneading in an extruder had a poor YI value of 13.

The results of Examples 8 to 10 and Comparative Example 7 are shown in Table 3.

## Table 3

| | Heat treatment temperature (°C) | Dissolved oxygen concentration (ppm) | $CCl_4$ in methylene chloride solution | | Pellet tone YI |
| --- | --- | --- | --- | --- | --- |
| | | | before heat treatment (ppm) | after heat treatment (ppm) | |
| Example 8 | 180 | 0 | 5 | 5 | 6 |
| " 9 | " | 5 | " | 16 | 7 |
| " 10 | " | 10 | " | 25 | 8 |
| Comparative Example 7 | " | 30 | " | 65 | 13 |

## Claims

1. A process for producing a resin having carbonate bondings, which comprises polymerizing a hydroxydiaryl compound, phosgene and, optionally, a diamine compound or an acid chloride, in a methylene chloride organic solvent, characterized in that the concentration of carbon tetrachloride in the phosgene and methylene chloride satisfies the following equation:

$$A + 5B \leq 200$$

wherein A represents the carbon tetrachloride concentration (ppm) in phosgene and B represents the carbon tetrachloride concentration (ppm) in methylene chloride.

2. A process according to claim 1 wherein the phosgene used as a starting material contains not more than 200 ppm of carbon tetrachloride.

3. A process according to claim 1 or 2 wherein the methylene chloride is recycled.

4. A process according to claim 3 wherein the carbon tetrachloride concentration is reduced in the recycled methylene chloride by distillation in the recycling system.

5. A process according to any one of claims 1 to 4 wherein the carbon tetrachloride concentration in the phosgene used as a starting material is reduced by distillation.

## EP 0 251 586 B1

6. A process according to any one of claims 1 to 5 wherein the carbon tetrachloride concentration in the methylene chloride is reduced by decreasing the dissolved oxygen concentration in the methylene chloride solution to not more than 20 ppm before it is removed by distillation to obtain the resin.

7. A process according to any one of claims 1 to 6 wherein the dissolved oxygen concentration of the methylene chloride is reduced to not more than 20 ppm by blowing in an inert gas.

8. A process according to any one of claims 1 to 7 wherein the resin having carbonate bondings is a polycarbonate.

9. A process according to any one of claims 1 to 8 wherein the carbon tetrachloride concentration in the resin having carbonate bondings is not more than 20 ppm.

10. A process according to claim 9 wherein the carbon tetrachloride concentration in the resin having carbonate bondings is not more than 10 ppm.

### Revendications

1. Procédé de production d'une résine ayant des liaisons carbonate, qui comprend la polymérisation d'un composé hydroxydiaryle, de phosgène et, facultativement, d'un composé diamine ou d'un chlorure d'acide, dans un solvant organique chlorure de méthylène, caractérisé en ce que la concentration de tétrachlorure de carbone dans le phosgène et le chlorure de méthylène satisfait l'inéquation suivante :

$$A + 5B \leq 200$$

dans laquelle A représente la concentration en tétrachlorure de carbone (ppm) dans le phosgène et B représente la concentration en tétrachlorure de carbone (ppm) dans le chlorure de méthylène.

2. Procédé selon la revendication 1 dans lequel le phosgène utilisé comme produit de départ ne contient pas plus de 200 ppm de tétrachlorure de carbone.

3. Procédé selon la revendication 1 ou 2 dans lequel le chlorure de méthylène est recyclé.

4. Procédé selon la revendication 3 dans lequel la concentration en tétrachlorure de carbone est réduite dans le chlorure de méthylène recyclé par distillation dans le système de recyclage.

5. Procédé selon l'une des revendications 1 à 4 dans lequel la concentration en tétrachlorure de carbone dans le phosgène utilisé comme produit de départ est réduite par distillation.

6. Procédé selon l'une des revendications 1 à 5 dans lequel la concentration en tétrachlorure de carbone dans le chlorure de méthylène est réduite par diminution de la concentration en oxygène dissous dans la solution de chlorure de méthylène à pas plus de 20 ppm, avant qu'il soit éliminé par distillation pour obtenir la résine.

7. Procédé selon l'une des revendications 1 à 6 dans lequel la concentration en oxygène dissous du chlorure de méthylène est réduite à pas plus de 20 ppm par balayage d'un gaz inerte.

8. Procédé selon l'une des revendications 1 à 7 dans lequel la résine ayant des liaisons carbonates est un polycarbonate.

9. Procédé selon l'une des revendications 1 à 8 dans lequel la concentration en tétrachlorure de carbone dans la résine ayant des liaisons carbonates n'est pas supérieure à 20 ppm.

10. Procédé selon la revendication 9 dans lequel la concentration en tétrachlorure de carbone dans la résine ayant des liaisons carbonates n'est pas supérieure à 10 ppm.

11

**Patentansprüche**

1.  Verfahren zur Herstellung eines Harzes mit Carbonatbindungen, wobei man eine Hydroxydiarylverbindung, Phosgen und, gegebenenfalls, eine Diaminverbindung oder ein Säurechlorid in einem organischen Methylenchloridlösungmittel polymerisiert, dadurch **gekennzeichnet,** daß die Konzentration von Kohlenstofftetrachlorid im Phosgen und Methylenchlorid die folgende Gleichung erfüllt:

    A + B ≦ 200

    worin A die Kohlenstofftetrachloridkonzentration (ppm) in Phosgen und B die Kohlenstofftetrachloridkonzentration (ppm) in Methylenchlorid darstellen.

2.  Verfahren gemäß Anspruch 1,
    wobei das als Ausgangsmaterial verwendete Phosgen nicht mehr als 200 ppm Kohlenstofftetrachlorid enthält.

3.  Verfahren gemäß Anspruch 1 oder 2,
    wobei das Methylenchlorid zurückgeführt wird.

4.  Verfahren gemäß Anspruch 3,
    wobei die Kohlenstofftetrachloridkonzentration im rückgeführten Methylenchlorid durch Destillation im Rückführsystem herabgesetzt wird.

5.  Verfahren gemäß jedem Anspruch 1 bis 4,
    wobei die Kohlenstofftetrachloridkonzentration im als Ausgangsmaterial verwendeten Phosgen durch Destillation herabgesetzt wird.

6.  Verfahren gemäß jedem Anspruch 1 bis 5,
    wobei die Kohlenstofftetrachloridkonzentration im Methylenchlorid vermindert wird, indem man die gelöste Sauerstoffkonzentration in der Methylenchloridlösung auf einen Wert herabsetzt, der nicht mehr als 20 ppm beträgt, bevor das Methylenchlorid durch Destillation zum Erhalt des Harzes entfernt wird.

7.  Verfahren gemäß jedem Anspruch 1 bis 6,
    wobei man die gelöste Sauerstoffkonzentration des Methylenchlorids auf einen Wert herabsetzt, der nicht mehr als 20 ppm beträgt, indem man ein Inertgas hindurchbläst.

8.  Verfahren gemäß jedem Anspruch 1 bis 7,
    wobei das Harz mit den Carbonatbindungen ein Polycarbonat ist.

9.  Verfahren gemäß jedem Anspruch 1 bis 8,
    wobei die Kohlenstofftetrachloridkonzentration im Harz mit den Carbonatbindungen nicht mehr als 20 ppm beträgt.

10. Verfahren gemäß Anspruch 9,
    wobei die Kohlenstofftetrachloridkonzentration im Harz mit den Carbonatbindungen nicht mehr als 10 ppm beträgt.